# EUROPÄISCHE PATENTSCHRIFT

(11) **EP 0 710 576 B1**
(45) Veröffentlichungstag und Bekanntmachung des Hinweises auf die Patenterteilung: **12.01.2000**
(21) Anmeldenummer: 95117027.3
(22) Anmeldetag: 28.10.1995
(51) Int. Cl.: B60C 9/06, B29D 30/08

(54) **Fahrzeugluftreifen und Verfahren zur Herstellung eines Fahrzeugluftreifens**
Pneumatic vehicle tyre and process for its manufacture
Bandage pneumatique pour véhicule et procédé pour sa fabrication

(30) Priorität: 02.11.1994 DE 4439010
(43) Veröffentlichungstag der Anmeldung: 08.05.1996
(73) Patentinhaber: Uniroyal Englebert Reifen GmbH, D-52068 Aachen (DE)
(72) Erfinder: Vögler, Hans-Jürgen, D-52134 Herzogenrath (DE); Schlösser, Gert, D-52068 Aachen (DE)

(56) Entgegenhaltungen:
- EP-A- 0 239 160
- EP-A- 0 407 134
- GB-A- 1 431 332
- PATENT ABSTRACTS OF JAPAN vol. 009, no. 060 (M-364), 16.März 1985 & JP-A-59 195406 (YOKOHAMA GOMU KK), 6.November 1984,
- PATENT ABSTRACTS OF JAPAN vol. 017, no. 664 (M-1523), 8.Dezember 1993 & JP-A-05 221204 (YOKOHAMA RUBBER CO LTD:THE), 31.August 1993,
- PATENT ABSTRACTS OF JAPAN vol. 018, no. 302 (M-1618), 9.Juni 1994 & JP-A-06 064066 (SUMITOMO RUBBER IND LTD), 8.März 1994,

## Beschreibung

Die Erfindung betrifft einen Fahrzeugluftreifen sowie ein Verfahren zur Herstellung eines Fahrzeugluftreifens.

Es ist bekannt, Fahrzeugluftreifen aus mehreren unterschiedlichen Schichten, beispielsweise bei Reifen radialer Bauart aus Innenschicht, Karkasse, Gürtel und Lauffläche und im Seitenbereich aus Innenschicht, Karkasse und Seitenteil von radial innen nach radial außen hin aufzubauen. Karkassen von Fahrzeugluftreifen sind üblicherweise aus einer oder mehreren Lagen von jeweils parallel zueinander in Kautschuk eingebetteten Festigkeitsträgern aufgebaut. Die einzelnen Karkassenlagen werden dabei aus durchgehenden Kautschukbändern mit parallel in Kautschukbandrichtung angeordneten Festigkeitsträgern gefertigt. Die mit den darin eingebetteten Festigkeitsträgern versehenen Kautschukbänder werden je nach gewünschter Schräglage der Festigkeitsträger zur Reifenäquatorebene im späteren Reifenaufbau üblicherweise in einzelne Stücke schräg oder bei radialem Karkassenaufbau quergeschnitten. Die schnittfreien Seiten der so erhaltenen Stücke, die zuvor bereits die Seiten des Kautschukbandes darstellten, werden dann überlicherweise zu einer durchgehenden Karkassenlage miteinander verbunden. Sobald die für den Umfang des Reifens gewünschte Karkassenlänge erreicht ist, wird die aus den einzelnen schräg- bzw. quergeschnittenen Karkassenstücken gebildete Karkassenlage auf der Wickeltrommel auf die bereits vorbereitete Innenschicht, auf eine bereits aufgelegte Karkassenschicht, oder, falls erforderlich, auf zusätzliche Zwischenschichten aufgelegt. Die Karkassenlage wird dabei um den gesamten Umfang herumgelegt und üblicherweise mit ihren Endbereichen unter Überlappung einzelner Festigkeitsträger miteinander verbunden. Anschließend werden, je nach gewünschter Ausführung, zusätzliche Karkassenschichten, Zwischenschichten, Gürtellagen und Lauffläche aufgebracht. Während des Herstellungsprozesses ist es üblich, zur Erzeugung der gewünschten Rohlingsform, die mit den Karkassenlagen versehene Aufbautrommel in radialer Richtung bei der Bombage zu expandieren.

Nach der Vulkanisation und Fertigstellung des Reifens, sobald dieser für den Betriebszustand aufgepumpt wird, machen sich Verdickungsstellen, die durch die Überlappung mehrerer Festigkeitsträger im Karkassenaufbau, insbesondere in der äußeren Karkassenlage, erzeugt wurden, negativ bemerkbar. Durch die Bombage werden nämlich die Festigkeitsträger stark gedehnt und bei anschließender Vulkanisation geschrumpft, so daß sich hier besonders feste Karkassenbereiche ergeben. Sobald der Reifen im montierten Zustand mit Innendruck belastet wird, zeigt gerade dieser verfestigte Bereich ein wesentlich schwächeres Expansionsverhalten als die umgebenden Karkassenbereiche. Das abweichende Festigkeits- und Elastizitätsverhalten der Karkasse in diesen Bereichen führt zu optisch feststellbaren Einschnürungen. Insbesondere bei der Verwendung von Polyester als Festigkeitsträger der Karkasse macht sich dies besonders stark bemerkbar.

Es sind mehrfach Vorschläge gemacht worden, nach denen die durch die Überlappung entstehenden Einschnürungen gemildert oder optisch überdeckt werden sollen. Beispielsweise wird durch die EP 0 239 160 B1 vorgeschlagen, im Bereich der Überlappung zusätzliche Spleißbänder vorzusehen. Als nächstliegendes Dokument wird die EP 0 407 134 B1 angesehen. In der EP 0 407 134 B1 wird vorgeschlagen, im Überlappungsbereich zumindest im Bereich des Wulstkerns zusätzliche Gummistreifen aufzulegen, die im Kernbereich als elastische Kissen dienen sollen, so daß bei Überdruck von innen die Festigkeitsträger im Bereich der Überlappung vom Kern unter elastischer Komprimierung des Kissens nach radial außen wandern und so die Einschnürung weitgehend überdeckt werden soll. Die Qualität der Überdeckung des Einschnürverhaltens hängt dabei von der Dicke des verwendeten Gummistreifens ab. Der zusätzliche Streifen führt zum Entstehen von zusätzlichen Uniformity-Problemen gegenüber herkömmlichen Reifen in Abhängigkeit von der Dicke des Streifens. Beiderseits des Streifens können sich zusätzlich Lufteinschlüsse zwischen der den Gummistreifen überdeckenden Schicht und der Karkassenschicht bilden in Abhängigkeit von der Dicke des Gummistreifens. Mit hohem Aufwand, beispielsweise durch zusätzliches Anrollen der den Gummistreifen überdeckenden Schicht ist ein Verteilen der Lufteinschlüsse zumindest bei dünnen Gummistreifen zwischen überdeckender Schicht und Karkasse denkbar, aber die langflächige Überdeckung der Karkassenlage durch die überdeckende Schicht verhindert eine Entfernung der Lufteinschlüsse. Soweit sie aus dem unmittelbaren Bereich des Gummistreifens verteilt wurden, bleiben sie dennoch im wesentlichen als Lufteinschlüsse zwischen Karkasse und überdeckender Schicht erhalten und führen zu zusätzlichen Problemen hinsichtlich der Haltbarkeit des Reifens. Aufgrund der hierdurch entstehenden Probleme sind zufriedenstellende Überdeckungen der Einschnürungen mit Hilfe eines derartigen zusätzlichen Gummistreifens, wenn überhaupt, nur mit hohem zusätzlichen Aufwand zur Lufteinschlußbeseitigung und zur Beseitigung der zusätzlichen Uniformity-Probleme zu realisieren.

Üblicherweise werden die oberhalb der Karkasse angeordneten Schichten so angeordnet, daß ihre Naht- bzw. Überlappungsstellen sich mit der Karkasse in ihrer Umfangsposition nicht decken. Jede vorhandene Überlappungsstelle bringt bereits geringfügige Probleme für die Uniformity und hinsichtlich der Haltbarkeit durch Lufteinschlüsse. Jedes zusätzliche Uniformity-Problem und jede zusätzliche Lufteinschlußgefahr erhöht den Aufwand zur Beseitigung und reduziert die Qualität des Reifens.

Der Erfindung liegt das Problem zugrunde, einen zuverlässigen Fahrzeugreifen sowie ein Verfahren zur Herstellung eines solchen Fahrzeugreifens mit vergleichmäßigter Seitenteiloberfläche mit einfachen Mitteln zu schaffen.

Das Problem wird erfindungsgemäß durch die Ausgestaltung eines Fahrzeugreifens gemäß den Merkmalen von Anspruch 1 sowie durch das Verfahren zur Herstellung eines Fahrzeugreifens nach Anspruch 5 gelöst.

Durch Anordnung einer in herkömmlichen Fahrzeugreifen bereits vorhandenen Überlappungsstelle einer radial oberhalb einer Karkassenlage angeordneten Kautschuklage in einer Umfangsposition, die der Umfangsposition der Karkassenlage im Bereich der Seitenwand entspricht, wird eine Verdickungsstelle im Bereich der Karkassennaht im Seitenwandbereich erzeugt, die die durch die Einschnürung unter Betriebsdruck erzeugte Delle im Bereich der Seitenwand weitgehend überdeckt. Die Überdeckung erfolgt ohne zusätzliches Material, ohne Erzeugung zusätzlicher Uniformity-Probleme und ohne Gefahr zusätzlicher Probleme hinsichtlich der Haltbarkeit des Reifens aufgrund von zusätzlichen Lufteinschlüssen oder durch besondere Belastung im Bereich des Wulstkerns.

Da die überlappenden Enden der überdeckenden Schicht individuell in ihrer Überlappungsbreite einfach einstellbar sind, ist eine genauere Abstimmung zusätzlich möglich. Ohne größere Eingriffe in übliche Herstellungsprozesse, ohne zusätzliche Verfahrensschritte und ohne zusätzliches Material kann die Einschnürung ohne Berücksichtigung zusätzlich erzeugter Uniformity- oder Haltbarkeitsprobleme nahezu vollständig überdeckt werden. Durch die Überlappung der Kautschukschicht oberhalb der Karkasse kann sogar gegenüber versetzten Überlappungen eine zuverlässigere Entfernung von Lufteinschlüssen ermöglicht werden. Die Überdeckung erfolgt auf direktem Weg am Ort der Einschnürungsgefahr.

In vorteilhafter Ausführung wird jeder Überlappungsstelle einer jeden Karkassenlage eine Überlappungsstelle einer radial außerhalb gelegenen Kautschukschicht zugeordnet, deren Überlappungsstelle im Bereich der Seitenteile in der Umfangsposition der Überlappungsstelle der Karkassenlage im Bereich der Seitenteile liegt. Auf diese Weise können zuverlässig alle Einschnürungsstellen weitgehend überdeckt werden.

Bevorzugt wird die Überlappungsstelle des Seitenstreifens in Umfangsposition einer Karkassennaht im Bereich des Seitenteils angeordnet. Auf diese Weise wird zuverlässig genau in dem Reifenbereich, in dem die Einschnürungen sichtbar werden, diesen entgegengewirkt. Zusätzliche Probleme in anderen Bereichen durch diese künstliche Verdickung werden ausgeschlossen.

Bevorzugt wird ein Fahrzeugluftreifen mit Karkaßfäden aus Polyester. Gerade bei dem kostengünstigen Polyester mit seinen starken Dehnungs- bzw. Schrumpfeigenschaften wirkt sich die Überdeckung der Einschnürung besonders zuverlässig aus.

Die Erfindung wird im folgenden anhand der in den Figuren 1 bis 6 näher dargestellten Ausführungsbeispiele näher erläutert.

Hierin zeigen:
- Fig. 1: den schematischen Aufbau eines Reifens in Querschnittsdarstellung,
- Fig. 2: den schematischen Reifenaufbau in perspektivischer Darstellung,
- Fig. 3: schematische Darstellung der Lagenüberdeckung beim Aufbau in einer ersten Überlappungsbreite,
- Fig. 4: schematische Darstellung gemäß Fig. 3 in einer zweiten Überlappungsbreite,
- Fig. 5: schematische Darstellung der Lagenüberdeckung mehrerer Karkaßlagen,
- Fig. 6: schematische Darstellung der Lagenbedeckung mit nur einer Karkaßlage.

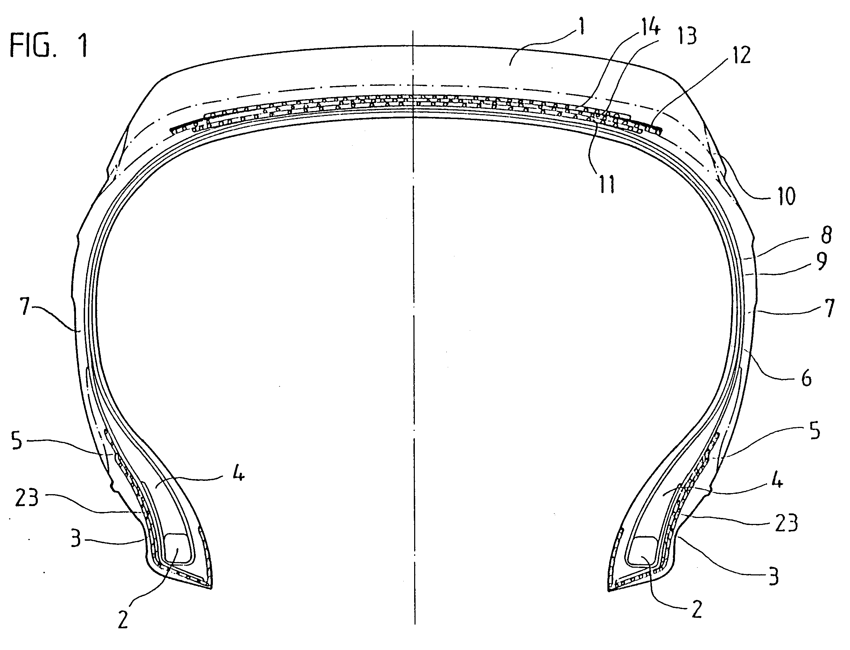

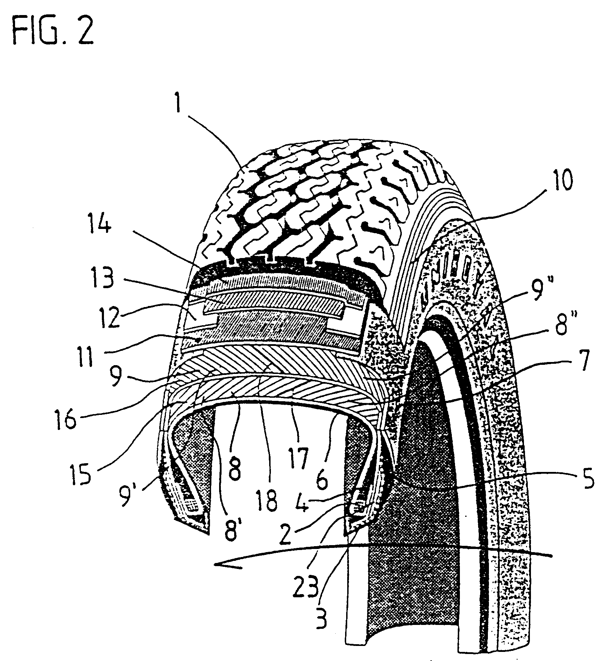

In den Fig. 1 und 2 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und dem linken Kern 2 mit Kernprofil 4 reicht, um den er in herkömmlicher Weise gelegt ist. Über der ersten Karkassenlage 8 ist in herkömmlicher Weise eine zweite Karkassenlage 9 gelegt, die sich ebenfalls von der in Fig. 1 rechts dargestellten Seite des Reifens bis zur links dargestellten Seite erstreckt. Beide Karkassenlagen sind in herkömmlicher Weise aus einer Karkassenlagenkautschukmischung und mit darin eingebetteten, jeweils zueinander parallel liegenden textilen Fäden 8 bzw. 9 bekannter Bauart aufgebauten Kautschukbändern hergestellt. In bekannter Weise werden diese Kautschukbänder an einem Schneidetisch schräggeschnitten und dann mit ihren parallelen, nicht geschnittenen Seiten aneinandergefügt.

Zu jeder Karkassenlage sind in Fig. 2 jeweils zwei derartige Karkassenstücke 8', 8'' bzw. 9', 9'' dargestellt. Das Karkassenlagenstück 8' ist an der Fügestelle 17 unter Überlappung einzelner Fäden auf das Karkassenlagenendstück 8'' gelegt. Ebenso ist das Karkassenstück 9' an der Fügestelle 18 unter Überlappung auf das Karkassenstück 9'' gelegt.

In herkömmlicher Weise ist im Ausführungsbeispiel von Fig. 2 im Kernbereich über einen Wulststreifen 23 und den Wulstverstärker 3 ein Hornprofil 5 und von diesem ausgehend bis in den Schulterbereich reichend ein Seitenstreifen 7 aufgelegt. Über den Umfang des Reifens reichen außerhalb der Karkassenlagen liegend mehrere Stahlgürtellagen 11, 13 und eine Nylonbandage 14 mit dazwischen befindiichem Gürtelkantenschutz 12 bekannter Art. Im Schulterbereich sind zusätzlich Schulterstreifen 10 aufgelegt. Den Abschluß des Reifenaufbaus bildet in bekannter Weise ein Laufstreifen 1.

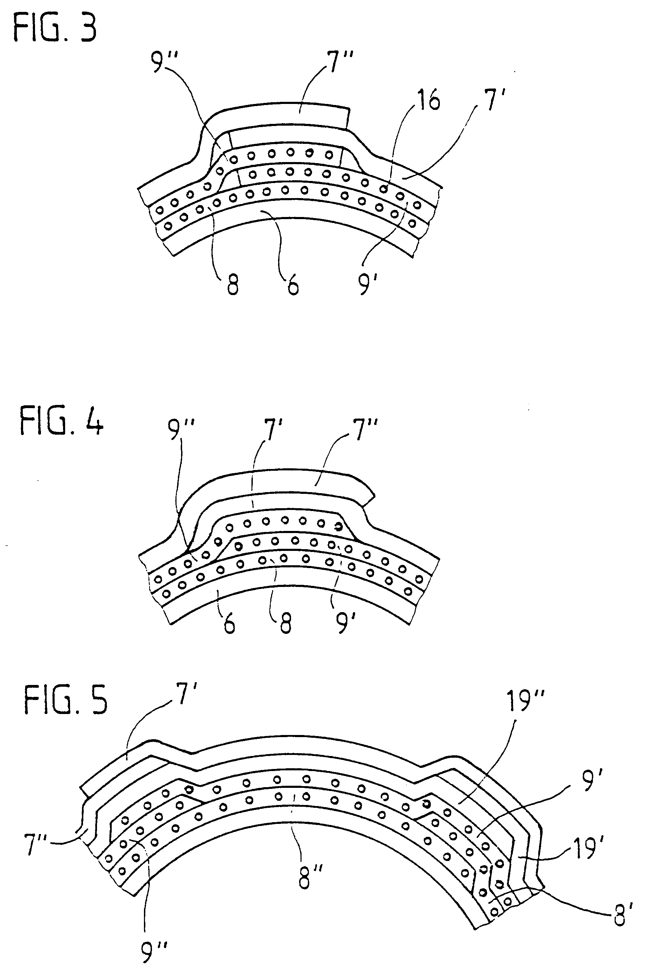

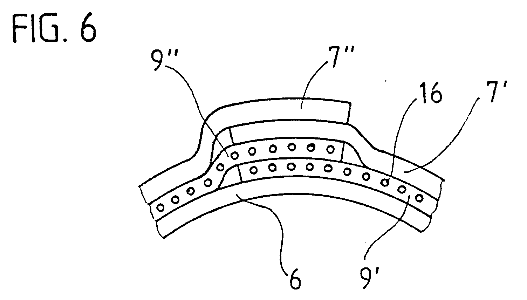

In Fig. 3 und 4 ist die Nahtüberdeckung in Umfangsrichtung von Seitenstreifen 7 und äußerer Karkaßschicht 9 dargestellt. Oberhalb der inneren Karkaßlage 8 überlappen sich die Karkassenenden 9' und 9'' der Karkassenlage 9. An gleicher Umfangsposition ist die Überlappung der Lagenenden 7' und 7'' des Seitenstreifens 7 angeordnet. Die Karkaßfäden 16 aus Polyester werden bei der Bombage extrem gedehnt und bilden nach erfolgter Vulkanisation im Bereich der Überlappung einen gegenüber den Bereichen außerhalb der Überlappung verfestigten Bereich. Bei Expansion der Reifenseitenwand aufgrund des Aufpumpens des montierten Reifens in den Betriebszustand werden die Bereiche außerhalb der Überlappung somit stärker gedehnt als der verfestigte Karkaßbereich im Bereich der Überlappung der Karkaßenden 9', 9''. Die hierdurch erzeugte Einschnürung im Oberflächenbereich der Seitenwand wird durch die Materialanhäufung der Überlappung der Enden 7' und 7'' der Seitenteile weitgehend überdeckt. Durch Variation der Überlappungsweite kann diese Überdeckung dem gewünschten Betriebszustand sowie dem einzelnen Expansionsverhalten des individuellen Reifenaufbaus angepaßt werden. In Fig. 4 ist ein Überlappungsbereich der Seitenstreifenenden 7' und 7'' dargestellt, bei dem die Seitenstreifenenden 7', 7'' in Umfangsrichtung jeweils geringfügig über das zugeordnete Karkassenende 9' bzw. 9'' hinausreichen. Durch entsprechende Formgebung der Karkassenenden bzw. der Laufstreifenenden anstelle eines jeweils wie in den Fig. 3 und 4 dargestellt gerade verlaufenden Stoßes ist es denkbar, die Enden auch verjüngend auslaufend zu gestalten, wodurch eine Feineinstellung der Einschnürungsverdeckung ermöglicht wird.

Wenn auch die wesentliche, eine Einschnürung erzeugende Karkassenüberlappung die radial äußere Karkassenüberlappung darstellt, so ist es dennoch denkbar, auch die geringfügige durch innere Karkassenlagen erzeugte Einschnürung ebenfalls zu überdecken. Dies ist insbesondere dann sinnvoll, wenn ohnehin eine zusätzliche Kautschukzwischenlage 19 zwischen Seitenteil und äußerer Karkassenschicht 9 vorgesehen ist. Dabei werden die überlappenden Enden 19' und 19'' der Kautschukschicht 19 in ihrer Umfangsposition radial oberhalb der Überlappung der Lagenenden 8' bzw. 8'' der unteren Karkassenschicht angeordnet.

Es ist auch denkbar, anstelle der Polyesterfäden 15, 16 der Karkassen andere Festigkeitsträger, beispielsweise aus Rayon zu verwenden. Polyesterfäden führen aufgrund ihres extremen Schrumpf- und Dehnverhaltens gegenüber Rayon zu besonders auffälligen Einschnürungen. Die Überlappungsanordnung gemäß den Fig. 3 bis 5 ist deswegen bei derartigen Festigkeitsträgern besonders wirkungsvoll. Es ist jedoch auch denkbar, die Überlappungsanordnung bei anderen Festigkeitsträgern anzuwenden.

Die überlappende Anordnung ist ebenso bei einem Fahrzeugluftreifen mit nur einer Karkassenlage, wie auch bei mehr als zwei Karkassenlagen anwendbar. Bei nur einer Karkassenlage gemäß Fig. 6 ermöglicht sie besonders einfach die Verdeckung aller beim Aufbau entstehenden Einschnürgefahrenstellen.

### Bezugszeichenliste

- 1: Laufstreifen
- 2: Kern
- 3: Wulstverstärker
- 4: Kernprofil
- 5: Hornprofil
- 6: Innenschicht
- 7: Seitenstreifen
- 8: Karkassenlage
- 9: Karkassenlage
- 10: Schulterstreifen
- 11: Gürtellage
- 12: Gürtelkantenschutz
- 13: Gürtellage
- 14: Gürtellage
- 15: Karkaßfaden
- 16: Karkaßfaden
- 17: Überlappungsstelle
- 18: Überlappungsstelle
- 19: Kautschukschicht
- 23: Wulststreifen

## Patentansprüche

1. Fahrzeugluftreifen
- mit einer oder mehreren sich über den Umfang des Reifens erstreckenden, in axialer Richtung von Wulst zu Wulst reichenden Karkassenlagen mit in Kautschuk eingebetteten Festigkeitsträgern,
- wobei sich die in Umfangsrichtung gerichteten Enden (9', 9'') zumindest einer Karkassenlage (9) zumindest im Bereich der Seitenteile des Reifens überlappen,
- mit zumindest einer weiteren sich in Umfangsrichtung erstreckenden Kautschukschicht (7) außerhalb der Karkasse (9) mit sich im Bereich der Seitenteile des Reifens in Umfangsrichtung überlappenden Enden (7', 7''), dadurch gekennzeichnet,
- daß die Umfangsposition der Überlappung dieser Kautschukschicht (7) auch Umfangsposition der Überlappung der Karkassenschicht (9) ist.

2. Fahrzeugluftreifen gemäß den Merkmalen von Anspruch 1,
- bei dem mehrere Karkassenlagen (8, 9) mit jeweils einer Überlappung ihrer in Umfangsrichtung weisenden Karkassenenden (8', 8'', 9', 9'') ausgebildet sind,
- wobei die Überlappungen dieser Karkassenlagen jeweils in unterschiedlicher Umfangsposition angeordnet sind,
- wobei zu jeder Umfangsposition einer Überlappung der Karkassenenden (8', 8'', 9', 9'') einer Karkassenlage (8, 9) eine Überlappung einer weiteren Kautschukschicht (19, 7) radial außerhalb der Karkasse im Bereich der Seitenteile ausgebildet ist, deren Überlappungsposition der zugeordneten Überlappungsposition der Karkassenschicht entspricht.

3. Fahrzeugluftreifen gemäß den Merkmalen der Ansprüche 1 oder 2,
- wobei die mit Überlappung ausgebildete Kautschukschicht eine Kautschukschicht des Seitenteils (7) ist.

4. Fahrzeugluftreifen gemäß den Merkmalen von einem oder mehreren der Ansprüche 1 bis 3,
- mit Festigkeitsträgern (15, 16) aus Polyester.

5. Verfahren zur Herstellung eines Fahrzeugluftreifens,
- bei der zumindest eine Karkassenlage (9) mit ihren in Umfangsrichtung weisenden Endbereichen (9', 9'') zumindest im Bereich der Seitenteile (7) des Reifens überlappt wird und bei der eine sich ebenfalls über den Umfang des Reifens erstreckende Kautschukschicht radial außerhalb der Karkassenlage derart aufgelegt wird, daß sich ihre in Umfangsrichtung weisenden Endbereiche in der Umfangsposition der Überlappung der Karkassenenden dieser Karkassenlage im Bereich der Seitenteile des Reifens ebenfalls überlappen.

## Claims

1. Pneumatic vehicle tyre,
- having one or more carcase plies, which extend over the circumference of the tyre, extend in an axial direction from bead to bead and are provided with reinforcing members embedded in rubber,
- the ends (9', 9''), orientated in the circumferential direction, of at least one carcase ply (9) overlapping each other at least in the region of the lateral portions of the tyre,
- having at least one additional rubber layer (7) outside the carcase (9), which layer extends in the circumferential direction and is provided with ends (7', 7''), which overlap each other in the region of the lateral portions of the tyre, when viewed with respect to the circumferential direction,
characterised in that
- the circumferential position of the overlapping of this rubber layer (7) is also the circumferential position of the overlapping of the carcase layer (9).

2. Pneumatic vehicle tyre according to the features of claim 1,
- wherein a plurality of carcase plies (8, 9) are each provided with an overlapping of their carcase ends (8', 8'', 9', 9''), which point in the circumferential direction,
- the overlappings of these carcase plies being each disposed in a different circumferential position,
- an overlapping of an additional rubber layer (19, 7) being provided radially externally of the carcase in the region of the lateral portions at each circumferential position of an overlapping of the carcase ends (8', 8'', 9', 9'') of a carcase ply (8, 9), the overlapping position of said rubber layer corresponding to the associated overlapping position of the carcase layer.

3. Pneumatic vehicle tyre according to the features of claims 1 or 2,
- wherein the rubber layer, provided with overlapping, is a rubber layer of the lateral portion (7).

4. Pneumatic vehicle tyre according to the features of one or more of claims 1 to 3,
- having reinforcing members (15, 16) formed from polyester.

5. Method of producing a pneumatic vehicle tyre,
- wherein at least one carcase ply (9), with its end regions (9', 9'') pointing in the circumferential direction, is overlapped at least in the region of the lateral portions (7) of the tyre, and wherein a rubber layer, which also extends over the circumference of the tyre, is placed radially externally of the carcase ply in such a manner that its end regions, which point in the circumferential direction, also overlap each other in the region of the lateral portions of the tyre when viewed with respect to the circumferential position of the overlapping of the carcase ends of this carcase ply.

## Revendications

1. Pneumatique de véhicule,
- comprenant une ou plusieurs nappes de carcasse s'étendant le long de la périphérie du pneumatique et de talon à talon dans la direction axiale, et comportant des armatures de résistance noyées dans du caoutchouc,
- les extrémités (9', 9'') orientées dans la direction périphérique d'au moins une nappe de carcasse (9) se chevauchant au moins dans la zone des parties latérales ou flancs du pneumatique,
- comprenant au moins une autre nappe de caoutchouc (7) s'étendant dans la direction périphérique, extérieurement à la carcasse (9), et présentant des extrémités (7', 7'') se chevauchant dans la direction périphérique, dans la zone des parties latérales ou flancs du pneumatique,
**caractérisé** en ce que la position périphérique du chevauchement de cette nappe de caoutchouc (7) est également la position périphérique du chevauchement de la nappe de carcasse (9).

2. Pneumatique de véhicule selon les caractéristiques de la revendication 1,
- dans lequel plusieurs nappes de carcasse (8, 9) sont réalisées de façon à présenter chacune un chevauchement de ses extrémités de carcasse (8', 8'', 9', 9'') dirigées dans la direction périphérique,
- les chevauchements de ces nappes de carcasse étant disposés respectivement dans des positions périphériques différentes,
- et pour chaque position périphérique d'un chevauchement des extrémités de carcasse (8', 8'', 9', 9'') d'une nappe de carcasse (8, 9), est réalisé un chevauchement d'une autre nappe de caoutchouc (19, 7), radialement à l'extérieur de la carcasse, dans la zone des parties latérales ou flancs, dont la position de chevauchement correspond à la position de chevauchement de la nappe de carcasse.

3. Pneumatique de véhicule selon les caractéristiques des revendications 1 ou 2,
- la nappe de caoutchouc réalisée avec chevauchement étant une nappe de caoutchouc de la partie latérale ou flanc (7).

4. Pneumatique de véhicule selon les caractéristiques de l'une ou de plusieurs des revendications 1 à 3,
- comprenant des armatures de résistance (15, 16) en polyester.

5. Procédé de fabrication d'un pneumatique de véhicule,
- selon lequel au moins une nappe de carcasse (9) est réalisée avec chevauchement de ses zones d'extrémité (9', 9'') dirigées dans la direction périphérique, au moins dans la zone des parties latérales (7) ou flancs du pneumatique, et selon lequel on applique une nappe de caoutchouc s'étendant également le long de la périphérie du pneumatique, radialement à l'extérieur de la nappe de carcasse, de façon telle, que ses zones d'extrémité dirigées dans la direction périphérique se chevauchent également au niveau de la position périphérique du chevauchement des extrémités de carcasse de cette nappe de carcasse, dans la zone des parties latérales ou flancs du pneumatique.
